# EUROPEAN PATENT APPLICATION

(11) **EP 3 481 016 A1**
(43) Date of publication of application: **08.05.2019**
(21) Application number: 16909278.0
(22) Date of filing: 22.07.2016
(51) Int. Cl.: H04L 12/911

(54) **METHOD AND APPARATUS FOR RESOURCE CONFIGURATION**

(71) Applicant: Huawei Technologies Co., Ltd., Longgang District Shenzhen, Guangdong 518129 (CN)
(72) Inventor: ZHOU, Yan, Shenzhen Guangdong 518129 (CN); ZOU, Lan, Shenzhen Guangdong 518129 (CN); ZHANG, Kai, Shenzhen Guangdong 518129 (CN); JI, Li, Shenzhen Guangdong 518129 (CN)
(74) Representative: Gill Jennings & Every LLP
(86) International application number: PCT/CN2016/091080
(87) International publication number: WO 2018/014351

(57) **Abstract**

A resource configuration method and an apparatus are disclosed, to resolve prior-art problems of a relatively undiversified and inflexible resource allocation mode, and being incapable of elastically responding to a sudden requirement for an additional resource. In the method, a resource configuration device may obtain a resource increment specific to a resource group, and reserve a resource of the resource increment for the resource group or allocate a resource of the resource increment to the resource group, so that the resource configuration device can flexibly allocate a resource to the resource group. When the resource group needs to be scaled out, but a target resource application volume for the scale-out exceeds a resource limit of the resource group that is maintained by the resource configuration device, the resource configuration device can allocate sufficient resources to the resource group. Therefore, according to the resource allocation method, a sudden requirement for an additional resource can be elastically responded to.

## Description

### TECHNICAL FIELD

This application relates to the field of communications technologies, and in particular, to a resource configuration method and an apparatus.

### BACKGROUND

Network functions virtualization (Network Function Virtualization, NFV) is a technology in which software processing of many functions is borne by a telecommunications network operator by using commodity hardware such as x86 and a virtualization technology, and some network functions are implemented in a general high-performance server, a switch, and a storage device, so that high device costs of a network are reduced.

In a process of instantiating a virtualized network function (Virtualized Network Function, VNF) by using an NFV architecture, before performing a life cycle operation procedure for the VNF, a VNF manager (VNF Manager, VNFM) may request a resource from an NFV orchestrator (NFV Orchestrator, NFVO) for a resource user. The NFVO allocates a resource to the resource user based on a resource limit maintained for the resource user. A quantity of resources allocated by the NFVO to the resource user is less than the resource limit, and the resource limit maintained by the NFVO is a permitted allowance (permitted allowance). When the permitted allowance maintained by the NFVO cannot satisfy resource consumption of the VNF, the NFVO may continue to request a resource from at least one virtualized infrastructure manager (Virtualized Infrastructure Manager, VIM). The at least one VIM may determine a tenant corresponding to the resource user, and allocate a resource to the tenant based on a locally maintained resource limit. A quantity of resources allocated by each VIM to the tenant is less than a corresponding resource limit maintained by the VIM, and the resource limit maintained by the VIM is a resource quota (quota).

It can be learned based on the foregoing descriptions that, during instantiation of a VNF, a resource configuration device (an NFVO or a VIM) can have a resource limit configured only unidirectionally, and allocate a resource to a resource user or a tenant based on a maintained resource limit. Such a resource allocation mode is relatively undiversified and inflexible. In addition, when the VNF is scaled out, after a target resource application volume for the scale-out exceeds the resource limit maintained by the resource configuration device, the resource configuration device cannot allocate sufficient resources to the VNF, affecting life cycle management of the VNF. Apparently, according to the foregoing resource configuration method, a sudden requirement for an additional resource cannot be elastically responded to.

### SUMMARY

Embodiments of the present invention provide a resource configuration method and an apparatus, to resolve prior-art problems of a relatively undiversified and inflexible resource allocation mode, and being incapable of elastically responding to a sudden requirement for an additional resource.

Specific technical solutions provided in the embodiments of the present invention are as follows:

According to a first aspect, an embodiment of the present invention provides a resource configuration method. The method includes:
obtaining, by a resource configuration device, a first resource increment specific to a resource group; and then determining first resources of the first resource increment, and reserving the first resources for the resource group or allocating the first resources to the resource group.

According to the foregoing method, the resource configuration device may obtain a resource increment specific to a resource group, and reserve a resource of the resource increment for the resource group or allocate a resource of the resource increment to the resource group, so that the resource configuration device can flexibly allocate a resource to the resource group. When the resource group needs to be scaled out, but a target resource application volume for the scale-out exceeds a resource limit of the resource group that is maintained by the resource configuration device, the resource configuration device can allocate sufficient resources to the resource group. Therefore, according to the resource allocation method, a sudden requirement for an additional resource can be elastically responded to.

In a possible design, the resource configuration device may obtain the first resource increment in the following two manners:
First manner: The resource configuration device receives a resource increment request message sent by a resource request device and carrying an identifier of the resource group, and obtains the first resource increment included in the resource request message.
Second manner: The resource configuration device generates the first resource increment based on a local resource configuration.

According to the first manner, the resource configuration device may obtain, by using the resource request device, a resource increment specific to the resource group, and reserve a resource of the resource increment for the resource group or allocate a resource of the resource increment to the resource group, so that the resource configuration device can flexibly allocate a resource to the resource group. According to the second manner, the resource configuration device may determine a resource increment specific to the resource group based on a resource configuration of the resource configuration device, and reserve a resource of the resource increment for the resource group or allocate a resource of the resource increment to the resource group, so that the resource configuration device can flexibly allocate a resource to the resource group.

In a possible design, the resource configuration device allocates the first resources to the resource group by using the following method:
adding, by the resource configuration device, the first resources to a resource limit that is maintained by the resource configuration device for the resource group, where the resource limit is allocated by the resource configuration device to the resource group.

In this way, the resource configuration device can directly allocate the first resources to the resource group.

In a possible design, after the resource configuration device reserves the first resources for the resource group, when a resource limit maintained by the resource configuration device is less than a target resource application volume of the resource group, the resource configuration device allocates some or all of the first resources to the resource group, where the resource limit is allocated by the resource configuration device to the resource group.

According to the foregoing manner, when the maintained resource limit is less than the target resource application volume of the resource group, the resource configuration device can allocate, to the resource group, the first resources reserved for the resource group.

In a possible design, the resource configuration device determines the first resources of the first resource increment by using the following steps:
obtaining, by the resource configuration device, an application condition corresponding to the first resource increment; and determining the first resources of the first resource increment when determining that the application condition is already satisfied, where the application condition is used to indicate a necessary condition under which the first resources of the first resource increment are reserved for or are allocated to the resource group.

According to the foregoing method, the resource configuration device determines the first resources when the application condition is satisfied, to perform resource configuration on the resource group. Apparently, for the resource configuration device, based on the application condition for the first resources, flexibility of performing resource configuration by the resource configuration device is improved.

In a possible design, when the resource configuration device obtains the first resource increment in the first manner in the foregoing design, the resource configuration device obtains, from the resource increment request message, the application condition included in the resource increment request message.

In a possible design, when the resource configuration device obtains the first resource increment in the second manner in the foregoing design, the resource configuration device obtains the application condition that is locally stored, that is sent by another device, or that is preset by a user.

In a possible design, the application condition used in the foregoing design includes any one or a combination of a time range, a service entity range, and a virtual resource data center range; the time range is used to limit a time during which the first resources of the first resource increment are reserved for the resource group; the service entity range is used to limit an entity that implements life cycle management of a particular virtualized network function VNF; and the virtual resource data center range is used to limit a particular data center in which the first resources are located.

According to the foregoing method, the resource configuration device can reserve a resource for the resource group or allocate a resource to the resource group when determining that various dimensions of application conditions are satisfied, thereby improving flexibility of performing resource configuration by the resource configuration device.

In a possible design, after the resource configuration device reserves the first resources for the resource group or allocates the first resources to the resource group, the resource configuration device obtains a second resource increment specific to the resource group; and releases the first resources, determines second resources of the second resource increment, and reserves the second resources for the resource group or allocates the second resources to the resource group.

According to the foregoing method, the resource configuration device can modify a resource reserved for or allocated to the resource, thereby improving flexibility of allocating a resource to the resource group.

In a possible design, the resource configuration device may obtain the second resource increment in the following two manners:
First manner: The resource configuration device receives a resource increment modification request message sent by the resource request device and carrying the identifier of the resource group, and obtains the second resource increment included in the resource increment modification request message.
Second manner: The resource configuration device generates the second resource increment based on a local resource configuration.

In a possible design, after the resource configuration device reserves the first resources for the resource group or allocates the first resources to the resource group, the resource configuration device may delete the first resources in the following two manners:
First manner: The resource configuration device receives a resource increment deletion request message sent by the resource request device and carrying the identifier of the resource group, and releases the first resources based on the resource increment deletion request message.
Second manner: The resource configuration device deletes the first resources based on a local resource configuration.

According to the foregoing method, the resource configuration device can delete a resource reserved for or allocated to the resource, thereby improving flexibility of allocating a resource to the resource group.

In a possible design, the resource configuration device includes a network functions virtualization orchestrator NFVO or a virtualized infrastructure manager VIM.

According to a second aspect, an embodiment of the present invention provides a resource configuration method. The method includes:
obtaining, by a first resource management device, a resource increment request message sent by a second resource management device and carrying an identifier of a resource group; and then forwarding the resource increment request message to a resource configuration device, so that the resource configuration device reserves a resource for the resource group or allocates a resource to the resource group based on the resource increment request message, where the resource increment request message further includes a resource increment, and the resource configuration device corresponds to the first resource management device.

According to the foregoing method provided in this embodiment of the present invention, the first resource management device obtains the resource increment request message sent by the second resource management device, and then forwards the resource increment request message to the resource configuration device corresponding to the first resource management device, to flexibly perform resource configuration on the resource group to which the second resource management device is specific. When the resource group needs to be scaled out, but a target resource application volume for the scale-out exceeds a resource limit of the resource group that is maintained by a resource configuration device corresponding to the second resource management device, the resource configuration device corresponding to the first resource management device can allocate sufficient resources to the resource group. Therefore, according to the resource allocation method, a sudden requirement for an additional resource can be elastically responded to.

In a possible design, the first resource management device forwards the resource increment request message to the resource configuration device by using the following steps:
determining, by the first resource management device, an identity level of the second resource management device; and forwarding the resource increment request message to the resource configuration device after determining that the identity level of the second resource management device is higher than an identity level of the first resource management device.

According to the foregoing method, the first resource management device processes, based on a negotiation policy of comparing identity levels, the resource increment request message sent by the second resource management device.

In a possible design, the first resource management device forwards the resource increment request message to the resource configuration device by using the following steps:
determining, by the first resource management device, a priority of the second resource management device; and forwarding the resource increment request message to the resource configuration device after determining that the priority of the second resource management device is higher than a priority of the first resource management device.

According to the foregoing method, the first resource management device processes, based on a negotiation policy of comparing the priorities of the resource management devices, the resource increment request message sent by the second resource management device.

In a possible design, the first resource management device forwards the resource increment request message to the resource configuration device by using the following steps:
determining, by the first resource management device, a weight of the second resource management device and a weight of the first resource management device; and forwarding the resource increment request message to the resource configuration device after determining that the weight of the second resource management device is greater than the weight of the first resource management device.

According to the foregoing method, the first resource management device processes, based on a negotiation policy of comparing the weights of the resource management devices, the resource increment request message sent by the second resource management device.

In a possible design, during the determining, by the first resource management device, a weight of the second resource management device, the following steps are included:
first, obtaining, by the first resource management device, at least one weight-type parameter and a weight coefficient corresponding to the at least one weight-type parameter; then, determining, by the first resource management device, a value of the at least one weight-type parameter of the second resource management device; and finally, determining the weight of the second resource management device based on the value of the at least one weight-type parameter of the second resource management device and a corresponding weight coefficient; and
during the determining, by the first resource management device, a weight of the first resource management device, the following step is included:
   determining, by the first resource management device, a value of the at least one weight-type parameter of the first resource management device, and determining the weight of the first resource management device based on the value of the at least one weight-type parameter of the first resource management device and a corresponding weight coefficient.

According to the foregoing method, the first resource management device can determine the weight of the first resource management device and the weight of the second resource management device.

In a possible design, the resource increment request message further includes an application condition, and the application condition is used to indicate a necessary condition under which the resource of the resource increment is reserved for or is allocated to the resource group.

In this way, the resource configuration device corresponding to the first resource management device performs resource configuration on the resource group when the application condition is satisfied. Apparently, based on the application condition, flexibility of performing resource configuration by the resource configuration device is improved.

In a possible design, the application condition includes any one or a combination of a time range, a service entity range, and a virtual resource data center range; the time range is used to limit a time during which the first resources of the resource increment are reserved for the resource group; the service entity range is used to limit an entity that implements life cycle management of a particular virtualized network function VNF; and the virtual resource data center range is used to limit a particular data center in which a resource requested by using the resource increment request message is located.

According to the foregoing method, the resource configuration device can reserve a resource for the resource group or allocate a resource to the resource group when determining that various dimensions of application conditions are satisfied, thereby improving flexibility of performing resource configuration by the resource configuration device.

In a possible design, the first resource management device includes a first virtualized network function manager VNFM, and the second resource management device includes a second VNFM.

According to a third aspect, an embodiment of the present invention further provides a resource configuration device. The resource configuration device has a function of implementing operations of the resource configuration device in the foregoing method example. The function may be implemented by hardware, or may be implemented by hardware executing corresponding software. The hardware or the software includes one or more modules corresponding to the foregoing function.

In a possible design, a structure of the resource configuration device includes an obtaining unit and a processing unit. These units may perform corresponding functions in the foregoing method example. For details, refer to detailed descriptions in the method example. Details are not described herein.

In a possible design, a structure of the resource configuration device includes a transceiver, a processor, a bus, and a memory. The transceiver is configured to communicate and interact with another device. The processor is configured to support the resource configuration device in performing a corresponding function in the foregoing method. The memory is coupled with the processor, and stores a necessary program instruction and necessary data for the resource configuration device.

According to a fourth aspect, an embodiment of the present invention further provides a first resource management device. The first resource management device has a function of implementing operations of the second node server in the foregoing method example. The function may be implemented by hardware, or may be implemented by hardware executing corresponding software. The hardware or the software includes one or more modules corresponding to the foregoing function.

In a possible design, a structure of the first resource management device includes an obtaining unit and a processing unit. These units may perform corresponding functions in the foregoing method example. For details, refer to detailed descriptions in the method example. Details are not described herein.

In a possible design, a structure of the first resource management device includes a transceiver, a processor, a bus, and a memory. The transceiver is configured to communicate and interact with another device. The processor is configured to support the first resource management device in performing a corresponding function in the foregoing method. The memory is coupled with the processor, and stores a necessary program instruction and necessary data for the first resource management device.

According to a fifth aspect, an embodiment of the present invention provides a resource configuration system. The resource configuration system includes a resource configuration device and a resource request device.

According to a sixth aspect, an embodiment of the present invention further provides another resource configuration system. The resource configuration system includes a first resource management device, a second resource management device, and a resource configuration device corresponding to the first resource management device.

According to the resource configuration method provided in the embodiments of the present invention, the resource configuration device may obtain a resource increment specific to a resource group, and reserve a resource of the resource increment for the resource group or allocate a resource of the resource increment to the resource group, so that the resource configuration device can flexibly allocate a resource to the resource group. When the resource group needs to be scaled out, but a target resource application volume for the scale-out exceeds a resource limit of the resource group that is maintained by the resource configuration device, the resource configuration device can allocate sufficient resources to the resource group. Therefore, according to the resource allocation method, a sudden requirement for an additional resource can be elastically responded to.

### BRIEF DESCRIPTION OF DRAWINGS

FIG. 1 is a schematic diagram of an NFV architecture according to an embodiment of the present invention;
FIG. 2 is a flowchart of a resource configuration method according to an embodiment of the present invention;
FIG. 3 is a flowchart of another resource configuration method according to an embodiment of the present invention;
FIG. 4 is a structural diagram of a resource configuration device according to an embodiment of the present invention;
FIG. 5 is a structural diagram of a first resource management device according to an embodiment of the present invention;
FIG. 6 is a structural diagram of another resource configuration device according to an embodiment of the present invention; and
FIG. 7 is a structural diagram of another first resource management device according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely some rather than all of the embodiments of the present invention. All other embodiments obtained by persons of ordinary skill in the art based on the embodiments of the present invention without creative efforts shall fall within the protection scope of the present invention.

Embodiments of the present invention provide a resource configuration method and an apparatus, to resolve prior-art problems of a relatively undiversified and inflexible resource allocation mode, and being incapable of elastically responding to a sudden requirement for an additional resource. The method and the apparatus are conceived based on a same invention. The method and the apparatus have similar principles for resolving the problems. Therefore, for implementation of the apparatus and the method, refer to each other, and details of repeated parts are not described.

In the embodiments of the present invention, a resource configuration device may obtain a resource increment specific to a resource group, and reserve a resource of the resource increment for the resource group or allocate a resource of the resource increment to the resource group, so that the resource configuration device can flexibly allocate a resource to the resource group. When the resource group needs to be scaled out, but a target resource application volume for the scale-out exceeds a resource limit of the resource group that is maintained by the resource configuration device, the resource configuration device can allocate sufficient resources to the resource group. Therefore, according to the resource allocation method, a sudden requirement for an additional resource can be elastically responded to.

In the following, some terms in this application are described, to help persons skilled in the art have a better understanding.

A resource configuration device used in the embodiments of the present invention is a device that implements resource configuration in an NFV architecture. Optionally, the resource configuration device may include an NFVO or a VIM.

A resource request device used in the embodiments of the present invention is a device that requests the resource configuration device to perform resource configuration in the NFV architecture. Optionally, the resource request device may include a VNFM or an NFVO. In a same embodiment, when the resource request device is a VNFM, the resource configuration device is an NFVO; or when the resource request device is an NFVO, the resource configuration device is a VIM.

A resource management device used in the embodiments of the present invention is a device that can send a resource request to another resource management device in the NFV architecture. One NFV architecture includes a plurality of resource management devices, and each resource management device corresponds to a resource configuration device. One of the plurality of resource management devices can send a resource request to at least one other resource management device. The resource management device may include a VNFM.

A resource group (Resource Group) used in the embodiments of the present invention is a logic resource set, and is used to indicate a subset of at least one resource instance allocated to one tenant. When a resource is a service resource, the resource group is a service resource group (Service Resource Group). When a resource is a virtual resource, the resource group is an infrastructure resource group (Infrastructure Resource Group). Usually, in the NFV architecture, an NFVO and a VNFM perform resource configuration on a service resource group, and a VIM performs resource configuration on an infrastructure resource group.

A resource limit provided in the embodiments of the present invention is maintained by the resource configuration device, and is an allocated maximum quantity of available resources allocated by the resource configuration device to a resource group or reserved by the resource configuration device for a resource group. For example, when the resource configuration device includes an NFVO, the resource limit is a permitted allowance; or when the resource configuration device includes a VIM, the resource limit is a quota.

A permitted allowance used in the embodiments of the present invention is maintained by an NFVO in the NFV architecture. Corresponding permitted allowances maintained by the NFVO for different granularities (such as a VNFM, a VNF, a VNF group, and a network service (Network Service, NS)) are different. For the NFVO, the VNFM, the VNF, the VNF group, the NS, and the like may also be referred to as resource users.

A quota used in the embodiments of the present invention is maintained by a VIM in the NFV architecture, and the VIM maintains different quotas for different tenants.

A plurality of means two or more than two.

The term and/or describes an association relationship for describing associated objects and represents that three relationships may exist. For example, A and/or B may represent the following three cases: Only A exists, both A and B exist, and only B exists. The character "/" generally indicates an "or" relationship between the associated objects.

In addition, it should be understood that, in the description of this application, terms "first" and "second" are only used to distinguish the purpose of the description, but cannot be understood as indication or implication of relative importance, and cannot be understood as an indication or implication of a sequence.

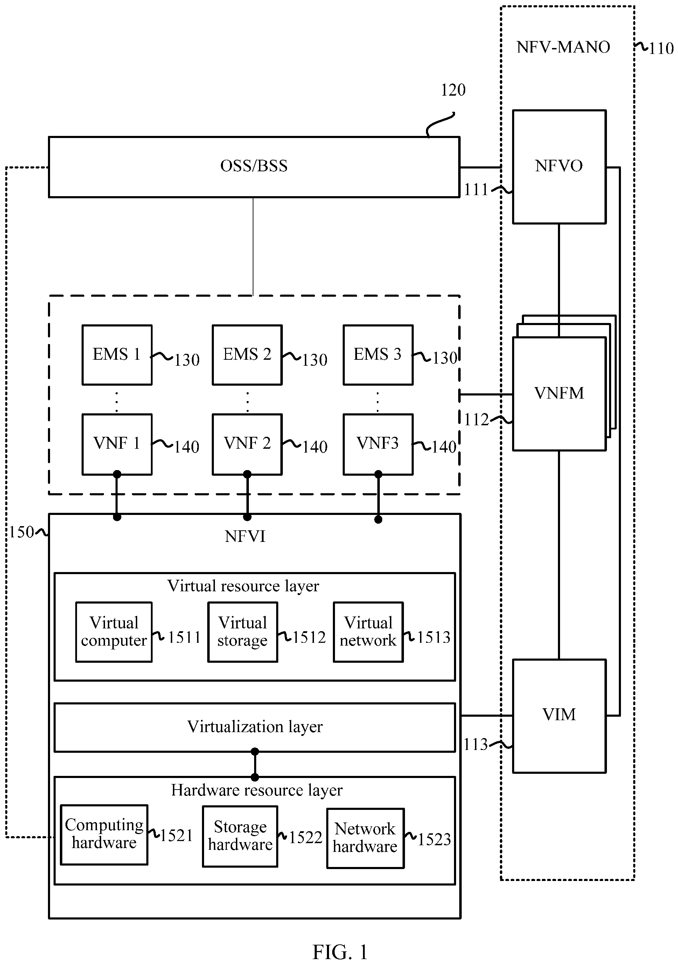

To more clearly describe the technical solutions in the embodiments of the present invention, a possible NFV architecture in the embodiments of the present invention is described below with reference to FIG. 1. FIG. 1 is a schematic diagram of an NFV architecture according to an embodiment of the present invention. The NFV architecture can implement a plurality of networks, for example, a local area network (Local Area Network, LAN), an Internet Protocol (Internet Protocol, IP) network, or an evolved packet core (Evolved Packet Core, EPC) network.

As shown in FIG. 1, the NFV architecture may include an NFV management and orchestration system (NFV Management and Orchestration System, NFV-MANO) 110, an NFV infrastructure (NFV Infrastructure, NFVI) 150, a plurality of virtualized network functions (Virtualized Network Function, VNF) 140, a plurality of element management systems (Element Management System, EMS) 130, and one or more operation support systems/business support systems (Operation Support System/Business Support System, OSS/BSS) 120.

The NFV-MANO 110 may include an NFV orchestrator (NFVO Orchestrator, NFVO) 111, one or more VNF managers (VNF Manager, VNFM) 112, and one or more virtualized infrastructure managers (Virtualized Infrastructure Manager, VIM) 113. The NFVI 150 may include a hardware resource layer including computing hardware 1521, storage hardware 1522, and network hardware 1523, a virtualization layer, and a virtual resource layer including a virtual computer 1511 (such as a virtual machine), a virtual storage 1512, and a virtual network 1513.

The computing hardware 1521 in the hardware resource layer may be a dedicated processor or a general purpose processor such as a central processing unit (Central Processing Unit, CPU) configured to provide processing and computing functions. The storage hardware 1522 such as a magnetic disk or a network attached storage (Network Attached Storage, NAS) is configured to provide a storage capability. The network hardware 1523 may be a switch, a router, and/or another network device.

The virtualization layer in the NFVI 150 is configured to abstract a hardware resource in the hardware resource layer to decouple the VNF 140 from a physical layer to which the hardware resource belongs, to provide a virtual resource to the VNF.

The virtual resource layer may include the virtual computer 1511, the virtual storage 1512, and the virtual network 1513. The virtual computer 1511 and the virtual storage 1512 may be provided to the VNF 140 in a form of a virtual machine or another virtual container. For example, one VNF 140 includes one or more virtual machines. The virtualization layer forms the virtual network 1513 by abstracting the network hardware 1523. The virtual network 1513 is configured to implement communication between a plurality of virtual machines or a plurality of virtual containers of another type that bear the VNF. The virtual network may be created by using a technology such as a virtual LAN (Virtual LAN, VLAN), a virtual private local area network service (Virtual Private LAN Service, VPLS), a virtual extensible local area network (Virtual eXtensible Local Area Network, VxLAN), or network virtualization using generic routing encapsulation (Network Virtualization using Generic Routing Encapsulation, NVGRE).

The OSS/BSS 120 is mainly oriented to a telecommunications service operator, and provides comprehensive network management and service operation functions, including network management (such as fault monitoring and network information collection), charging management, customer service management, and the like.

The NFV-MANO 110 may be configured to implement monitoring and management of the VNF 140 and the NFVI 150. The NFVO 111 may communicate with the one or more VNFMs 112 to implement a resource related request, send configuration information to the VNFM 112, and collect status information of the VNF 140. Additionally, the NFVO 111 may communicate with the VIM 113 to allocate a resource, and/or reserve and exchange configuration information and status information of virtualized hardware resources. The VNFM 112 may be configured to: manage the one or more VNFs 140 and perform various management functions, for example, initiate, update, query, and/or terminate the VNF 140. The VIM 113 may be configured to control and manage interaction between the VNF 140 and the computing hardware 1521, the storage hardware 1522, the network hardware 1523, the virtual computer 1511, the virtual storage 1512, and the virtual network 1513. For example, the VIM 113 may be configured to perform an operation of allocating a resource to the VNF 140. The VNFM 112 and the VIM 113 may communicate with each other to exchange the configuration and status information of the virtualized hardware resources.

The NFVI 150 includes hardware and software. The hardware and the software jointly establish a virtualized environment to deploy, manage, and execute the VNF 140. In other words, the hardware resource layer and the virtual resource layer are configured to provide a virtual resource, for example, a virtual machine and/or a virtual container in another form, to the VNF 140.

As shown in FIG. 1, the VNFM 112 may communicate with the VNF 140 and the EMS 130 to perform life cycle management of the VNF and exchange configuration/status information. The VNF 140 is virtualization of at least one network function, and the network function is provided by a physical network device previously. In an implementation, the VNF 140 may be a virtualized mobility management entity (Mobility Management Entity, MME) node, configured to provide all network functions provided by a typical non-virtualized MME device. In another implementation, the VNF 140 may be configured to implement functions of some of all components provided by the non-virtualized MME device. One VNF 140 may include one or more virtualized network function components (VNF Component, VNFC), and the VNFC may be a virtual machine or a virtual container in another form. The EMS 130 may be configured to manage the one or more VNFs 140.

As can be learned based on descriptions of functions of composition parts in a system architecture of an NFV system, the VNFM 112 is configured to perform various management functions on the VNF 140, for example, initiate, update, query, and terminate the VNF 140. The VIM 113 is configured to control and manage interaction between the VNF 140 and other parts. Therefore, if one VNF 140 is to be implemented, the VNFM 112 and the VIM 113 need to work cooperatively. Therefore, the VNFM 112 and the VIM 113 can communicate with each other to exchange the configuration and status information of the virtualized hardware resources. The VNFM 112 and the VIM 113 establish a communication connection by using an interface.

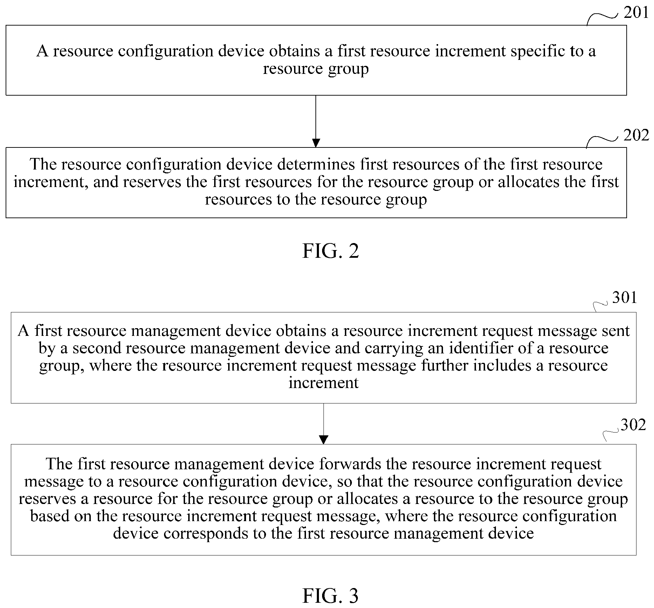

An embodiment of the present invention provides a resource configuration method. The method may be used in, but is not limited to, the NFV architecture shown in FIG. 1. The method is applied to the resource configuration device in the NFV architecture, and the resource configuration device may include an NFVO or a VIM. Referring to FIG. 2, a specific procedure of the method includes the following steps.

Step 201: The resource configuration device obtains a first resource increment specific to a resource group.

Optionally, when the resource configuration device is an NFVO, the resource group is a service resource group; or when the resource configuration device is a VIM, the resource group is an infrastructure resource group.

Optionally, the resource configuration device may obtain the first resource increment in the following two manners:
First manner: The resource configuration device receives a resource increment request message sent by a resource request device and carrying an identifier of the resource group, and obtains the first resource increment included in the resource request message.
Second manner: The resource configuration device generates the first resource increment based on a local resource configuration.

In the first manner, the resource request device may include a VNFM or an NFVO. When the resource request device is a VNFM, the resource configuration device is an NFVO; or when the resource request device is an NFVO, the resource configuration device is a VIM. In the second manner, the resource request device may include an NFVO or a VIM.

Step 202: The resource configuration device determines first resources of the first resource increment, and reserves the first resources for the resource group or allocates the first resources to the resource group.

Optionally, the first resource may be a computing resource, a network resource, a storage resource, or a port resource. This is not limited in the present invention.

Optionally, the determining, by the resource configuration device, first resources of the first resource increment includes the following steps:
obtaining, by the resource configuration device, an application condition corresponding to the first resource increment, where the application condition is used to indicate a necessary condition under which the first resources of the first resource increment are reserved for or are allocated to the resource group; and
determining, by the resource configuration device, the first resources of the first resource increment when determining that the application condition is already satisfied.

According to the foregoing method, the resource configuration device determines the first resources when the application condition is satisfied, to perform resource configuration on the resource group. Apparently, for the resource configuration device, based on the application condition for the first resources, flexibility of performing resource configuration by the resource configuration device is improved.

Optionally, the application condition may include, but is not limited to, any one or a combination of a time range, a service entity range, and a virtual resource data center range;
the time range is used to limit a time during which the first resources of the first resource increment are reserved for the resource group, for example, information about a time period in which the resources are available;
the service entity range is used to limit an entity, for example, a VNF, an NS, or a VNFM, that implements life cycle management of a particular virtualized network function VNF; and
the virtual resource data center range is used to limit a particular data center, for example, a data center or a VIM in the NFV architecture, in which the first resources are located.

According to the foregoing method, the resource configuration device can reserve a resource for the resource group or allocate a resource to the resource group when determining that various dimensions of application conditions are satisfied, thereby improving flexibility of performing resource configuration by the resource configuration device.

Optionally, in step 202, the resource configuration device may directly allocate the first resources to the resource group; or the resource configuration device reserves the first resources for the resource group instead of directly allocating the first resources to the resource group. In this way, when a resource limit allocated by the resource configuration device to the resource group cannot meet a requirement, the first resources are allocated to the resource group.

The allocating, by the resource configuration device, the first resources to the resource group includes:
adding, by the resource configuration device, the first resources to a resource limit that is maintained by the resource configuration device for the resource group, where the resource limit is allocated by the resource configuration device to the resource group.

According to the method, the resource configuration device can directly add the first resources to the resource limit.

Optionally, after the reserving, by the resource configuration device, the first resources for the resource group, the method further includes:
when a resource limit maintained by the resource configuration device is less than a target resource application volume of the resource group, allocating, by the resource configuration device, some or all of the first resources to the resource group, where the resource limit is allocated by the resource configuration device to the resource group. A quantity of resources that are in the first resources and that are allocated to the resource group is equal to the target resource application volume minus the resource limit.

According to the foregoing method, the resource configuration device can allocate a resource to the resource group based on the first resources.

Optionally, when the resource configuration device performs step 201, if the resource configuration device obtains the first resource increment in the first manner, after step 202, the resource configuration device may return a resource increment response message to the resource request device. The resource increment response message is used to notify the resource request device that the resource configuration device has performed resource configuration on the resource group.

Optionally, after step 202, the resource configuration device may further manage, for example, modify or delete, the first resources reserved for or allocated to the resource group.

Optionally, after the resource configuration device reserves the first resources for the resource group or allocates the first resources to the resource group, the resource configuration device modifies the first resources, and the following steps are included:
obtaining, by the resource configuration device, a second resource increment specific to the resource group; and
releasing, by the resource configuration device, the first resources, determining second resources of the second resource increment, and reserving the second resources for the resource group or allocating the second resources to the resource group.

According to the foregoing method, the resource configuration device can modify a resource reserved for or allocated to the resource, thereby improving flexibility of allocating a resource to the resource group.

Optionally, in the foregoing steps, a manner of obtaining the second resource increment by the resource configuration device is the same as a manner of obtaining the first resource increment, and includes the following two manners. Details are not described again in this embodiment of the present invention:
First manner: The resource configuration device receives a resource increment modification request message sent by the resource request device and carrying the identifier of the resource group, and obtains the second resource increment included in the resource increment modification request message.
Second manner: The resource configuration device generates the second resource increment based on a local resource configuration.

Optionally, after the resource configuration device reserves the first resources for the resource group or allocates the first resources to the resource group, the resource configuration device may delete the first resources in the following two manners:
First manner: The resource configuration device receives a resource increment deletion request message sent by the resource request device and carrying the identifier of the resource group, and releases the first resources based on the resource increment deletion request message.
Second manner: The resource configuration device deletes the first resources based on a local resource configuration. Herein, deletion of the first resources may be deletion of information about the first resources from a resource configuration table.

According to the foregoing method, the resource configuration device can delete a resource reserved for or allocated to the resource, thereby improving flexibility of allocating a resource to the resource group.

According to the resource configuration method provided in this embodiment of the present invention, the resource configuration device may obtain a resource increment specific to a resource group, and reserve a resource of the resource increment for the resource group or allocate a resource of the resource increment to the resource group, so that the resource configuration device can flexibly allocate a resource to the resource group. When the resource group needs to be scaled out, but a target resource application volume for the scale-out exceeds a resource limit of the resource group that is maintained by the resource configuration device, the resource configuration device can allocate sufficient resources to the resource group. Therefore, according to the resource allocation method, a sudden requirement for an additional resource can be elastically responded to.

An embodiment of the present invention further provides another resource configuration method. The method may be used in, but is not limited to, the NFV architecture shown in FIG. 1. The method is applied to the resource management device in the NFV architecture, and the resource management device may include a VNFM. Referring to FIG. 3, a specific procedure of the method includes the following steps.

Step 301: A first resource management device obtains a resource increment request message sent by a second resource management device and carrying an identifier of a resource group, where the resource increment request message further includes a resource increment.

Optionally, a resource management interface is maintained between resource management devices in the NFV architecture, and is configured to perform resource negotiation. To be specific, the first resource management device sends a resource increment request message to another resource management device (the second resource management device), to request the another resource management device to perform resource configuration on the resource group corresponding to the first resource management device.

Step 302: The first resource management device forwards the resource increment request message to a resource configuration device, so that the resource configuration device reserves a resource for the resource group or allocates a resource to the resource group based on the resource increment request message, where the resource configuration device corresponds to the first resource management device.

Optionally, the first resource management device processes, based on a particular negotiation policy, the resource increment request message sent by the second resource management device. The negotiation policy includes a manner such as a manner of comparing identity levels (which are classified into a primary manager, a non-primary manager, and the like), a manner of comparing priorities of the resource management devices, or a manner of comparing weights of the resource management devices.

Optionally, when the first resource management device performs step 302 by using the manner of comparing the identity levels, the following steps are included:
determining, by the first resource management device, an identity level of the second resource management device; and
forwarding, by the first resource management device, the resource increment request message to the resource configuration device after determining that the identity level of the second resource management device is higher than an identity level of the first resource management device; or choosing, by the first resource management device based on a policy of the first resource management device, to accept resource negotiation (forwarding the resource increment request message to the resource configuration device) or reject resource negotiation (performing no processing, or sending, to the second resource management device, a response message including a rejection indication) after determining that the identity level of the second resource management device is lower than an identity level of the first resource management device.

Optionally, when the first resource management device performs step 302 by using the manner of comparing the priorities of the resource management devices, the following steps are included:
determining, by the first resource management device, a priority of the second resource management device; and
forwarding, by the first resource management device, the resource increment request message to the resource configuration device after determining that the priority of the second resource management device is higher than a priority of the first resource management device; or choosing, by the first resource management device based on a policy of the first resource management device, to accept or reject resource negotiation after determining that the priority of the second resource management device is lower than or equal to a priority of the first resource management device.

Optionally, when the first resource management device performs step 302 by using the manner of comparing the weights of the resource management devices, the following steps are included:
determining, by the first resource management device, a weight of the second resource management device and a weight of the first resource management device; and
forwarding, by the first resource management device, the resource increment request message to the resource configuration device after determining that the weight of the second resource management device is greater than the weight of the first resource management device; or rejecting, by the first resource management device, resource negotiation after determining that the weight of the second resource management device is less than or equal to the weight of the first resource management device.

Optionally, the determining, by the first resource management device, a weight of the second resource management device includes:
obtaining, by the first resource management device, at least one weight-type parameter and a weight coefficient corresponding to the at least one weight-type parameter, for example, obtaining the at least one weight-type parameter and the corresponding weight coefficient that are stored in the NFVO; and
determining, by the first resource management device, a value of the at least one weight-type parameter of the second resource management device, and determining the weight of the second resource management device based on the value of the at least one weight-type parameter of the second resource management device and a corresponding weight coefficient; and
the determining, by the first resource management device, a weight of the first resource management device includes:
determining, by the first resource management device, a value of the at least one weight-type parameter of the first resource management device, and determining the weight of the first resource management device based on the value of the at least one weight-type parameter of the first resource management device and a corresponding weight coefficient.

According to the foregoing three manners, the first resource management device can implement resource negotiation in a plurality of different manners.

The resource increment request message further includes an application condition, and the application condition is used to indicate a necessary condition under which the resource of the resource increment is reserved for or is allocated to the resource group.

The application condition is carried in the resource increment request message. In this way, the resource configuration device corresponding to the first resource management device performs resource configuration on the resource group when the application condition is satisfied. Apparently, based on the application condition, flexibility of performing resource configuration by the resource configuration device is improved.

Optionally, the application condition may include, but is not limited to, any one or a combination of a time range, a service entity range, and a virtual resource data center range;
the time range is used to limit a time during which the first resources of the resource increment are reserved for the resource group;
the service entity range is used to limit an entity that implements life cycle management of a particular virtualized network function VNF; and
the virtual resource data center range is used to limit a particular data center in which a resource requested by using the resource increment request message is located.

According to the foregoing method, the resource configuration device can reserve a resource for the resource group or allocate a resource to the resource group when determining that various dimensions of application conditions are satisfied, thereby improving flexibility of performing resource configuration by the resource configuration device.

Optionally, after step 302, the resource configuration device corresponding to the first resource management device can perform, by using the resource configuration method shown in FIG. 2, resource configuration on the resource group to which the second resource management device is specific. In this case, the first resource management device may be used as the resource request device in the method. For a specific resource configuration step, refer to the embodiment corresponding to FIG. 2. Details are not described herein again.

According to the resource configuration method provided in this embodiment of the present invention, the first resource management device obtains the resource increment request message sent by the second resource management device, and then forwards the resource increment request message to the resource configuration device corresponding to the first resource management device, to flexibly perform resource configuration on the resource group to which the second resource management device is specific. When the resource group needs to be scaled out, but a target resource application volume for the scale-out exceeds a resource limit of the resource group that is maintained by a resource configuration device corresponding to the second resource management device, the resource configuration device corresponding to the first resource management device can allocate sufficient resources to the resource group. Therefore, according to the resource allocation method, a sudden requirement for an additional resource can be elastically responded to.

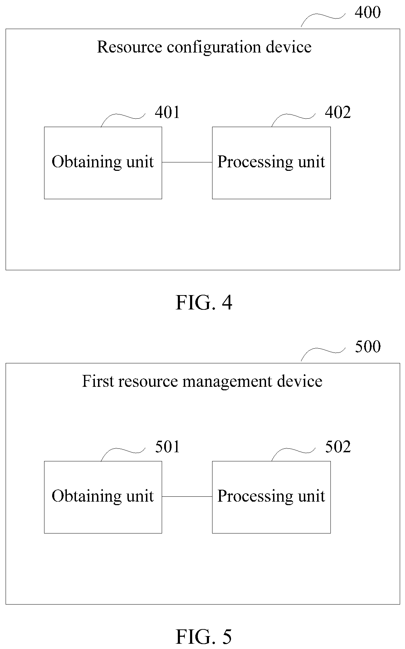

Based on the foregoing embodiment, an embodiment of the present invention further provides a resource configuration device. The resource configuration device can implement the resource configuration method shown in FIG. 2. Referring to FIG. 4, the resource configuration device 400 includes an obtaining unit 401 and a processing unit 402.

The obtaining unit 401 is configured to obtain a first resource increment specific to a resource group.

The processing unit 402 is configured to: determine first resources of the first resource increment, and reserve the first resources for the resource group or allocate the first resources to the resource group.

Optionally, the obtaining unit 401 is specifically configured to:
receive a resource increment request message sent by a resource request device and carrying an identifier of the resource group, and obtain the first resource increment included in the resource request message; or
generate the first resource increment based on a local resource configuration.

Optionally, when allocating the first resources to the resource group, the processing unit 402 is specifically configured to:
add the first resources to a resource limit that is maintained by the resource configuration device 400 for the resource group, where the resource limit is allocated by the resource configuration device 400 to the resource group.

Optionally, the processing unit 402 is further configured to:
after reserving the first resources for the resource group, when a resource limit maintained by the resource configuration device 400 is less than a target resource application volume of the resource group, allocate some or all of the first resources to the resource group, where the resource limit is allocated by the resource configuration device 400 to the resource group.

Optionally, when determining the first resources of the first resource increment, the processing unit 402 is specifically configured to:
obtain an application condition corresponding to the first resource increment, where the application condition is used to indicate a necessary condition under which the first resources of the first resource increment are reserved for or are allocated to the resource group; and
determine the first resources of the first resource increment when determining that the application condition is already satisfied.

Optionally, the application condition includes any one or a combination of a time range, a service entity range, and a virtual resource data center range;
the time range is used to limit a time during which the first resources of the first resource increment are reserved for the resource group;
the service entity range is used to limit an entity that implements life cycle management of a particular virtualized network function VNF; and
the virtual resource data center range is used to limit a particular data center in which the first resources are located.

Optionally, the obtaining unit 401 is further configured to:
after the first resources are reserved for or are allocated to the resource group, obtain a second resource increment specific to the resource group; and
the processing unit 402 is further configured to: release the first resources, determine second resources of the second resource increment, and reserve the second resources for the resource group or allocate the second resources to the resource group.

Optionally, when obtaining the second resource increment, the obtaining unit 401 is specifically configured to:
receive a resource increment modification request message sent by the resource request device and carrying the identifier of the resource group, and obtain the second resource increment included in the resource increment modification request message; or
generate the second resource increment based on a local resource configuration.

Optionally, the processing unit 402 is further configured to: after reserving the first resources for the resource group or allocating the first resources to the resource group, receive a resource increment deletion request message sent by the resource request device and carrying the identifier of the resource group, and release the first resources based on the resource increment deletion request message; or delete the first resources based on a local resource configuration.

Optionally, the resource configuration device 400 includes an NFVO or a VIM.

According to the resource configuration device provided in this embodiment of the present invention, the resource configuration device may obtain a resource increment specific to a resource group, and reserve a resource of the resource increment for the resource group or allocate a resource of the resource increment to the resource group, so that the resource configuration device can flexibly allocate a resource to the resource group. When the resource group needs to be scaled out, but a target resource application volume for the scale-out exceeds a resource limit of the resource group that is maintained by the resource configuration device, the resource configuration device can allocate sufficient resources to the resource group. Therefore, according to the resource allocation method, a sudden requirement for an additional resource can be elastically responded to.

Based on the foregoing embodiment, an embodiment of the present invention further provides a first resource management device. The resource management device can implement the resource configuration method shown in FIG. 3. Referring to FIG. 5, the first resource management device 500 includes an obtaining unit 501 and a processing unit 502.

The obtaining unit 501 is configured to obtain a resource increment request message sent by a second resource management device and carrying an identifier of a resource group, where the resource increment request message further includes a resource increment.

The processing unit 502 is configured to forward the resource increment request message to a resource configuration device, so that the resource configuration device reserves a resource for the resource group or allocates a resource to the resource group based on the resource increment request message, where the resource configuration device corresponds to the first resource management device 500.

Optionally, the processing unit 502 is specifically configured to:
determine an identity level of the second resource management device; and
forward the resource increment request message to the resource configuration device after determining that the identity level of the second resource management device is higher than an identity level of the first resource management device 500.

Optionally, the processing unit 502 is specifically configured to:
determine a priority of the second resource management device; and
forward the resource increment request message to the resource configuration device after determining that the priority of the second resource management device is higher than a priority of the first resource management device 500.

Optionally, the processing unit 502 is specifically configured to:
determine a weight of the second resource management device and a weight of the first resource management device 500; and
forward the resource increment request message to the resource configuration device after determining that the weight of the second resource management device is greater than the weight of the first resource management device 500.

Optionally, when determining the weight of the second resource management device, the processing unit 502 is specifically configured to:
obtain at least one weight-type parameter and a weight coefficient corresponding to the at least one weight-type parameter; and
determine a value of the at least one weight-type parameter of the second resource management device, and determine the weight of the second resource management device based on the value of the at least one weight-type parameter of the second resource management device and a corresponding weight coefficient; and
when determining the weight of the first resource management device 500, the processing unit 502 is specifically configured to:
   determine a value of the at least one weight-type parameter of the first resource management device 500, and determine the weight of the first resource management device 500 based on the value of the at least one weight-type parameter of the first resource management device 500 and a corresponding weight coefficient.

Optionally, the resource increment request message further includes an application condition, and the application condition is used to indicate a necessary condition under which the resource of the resource increment is reserved for or is allocated to the resource group.

Optionally, the application condition includes any one or a combination of a time range, a service entity range, and a virtual resource data center range;
the time range is used to limit a time during which the first resources of the resource increment are reserved for the resource group;
the service entity range is used to limit an entity that implements life cycle management of a particular virtualized network function VNF; and
the virtual resource data center range is used to limit a particular data center in which a resource requested by using the resource increment request message is located.

Optionally, the first resource management device 500 includes a first VNFM, and the second resource management device includes a second VNFM.

According to the first resource management device provided in this embodiment of the present invention, the first resource management device obtains the resource increment request message sent by the second resource management device, and then forwards the resource increment request message to the resource configuration device corresponding to the first resource management device, to flexibly perform resource configuration on the resource group to which the second resource management device is specific. When the resource group needs to be scaled out, but a target resource application volume for the scale-out exceeds a resource limit of the resource group that is maintained by a resource configuration device corresponding to the second resource management device, the resource configuration device corresponding to the first resource management device can allocate sufficient resources to the resource group. Therefore, according to the resource allocation method, a sudden requirement for an additional resource can be elastically responded to.

It should be noted that unit division in this embodiment of the present invention is an example and is merely logical function division. During actual implementation, there may be another division manner. Functional units in this embodiment of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

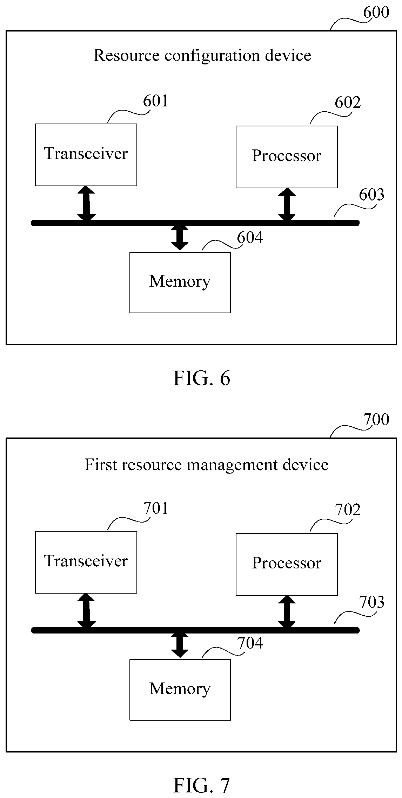

Based on the foregoing embodiment, an embodiment of the present invention further provides a resource configuration device. The resource configuration device may include the NFVO or the VIM in the NFV architecture shown in FIG. 1. The resource configuration device can implement the resource configuration method shown in FIG. 2. Referring to FIG. 6, the resource configuration device 600 includes a transceiver 601, a processor 602, a bus 603, and a memory 604.

The transceiver 601, the processor 602, and the memory 604 are connected to each other by using the bus 603. The bus 603 may be a peripheral component interconnect (peripheral component interconnect, PCI for short) bus, an extended industry standard architecture (extended industry standard architecture, EISA for short) bus, or the like. The bus may be categorized as an address bus, a data bus, a control bus, or the like. For ease of indication, the bus is indicated by using only one bold line in FIG. 6. However, it does not indicate that there is only one bus or only one type of bus.

The transceiver 601 is configured to communicate and interact with another device connected to the resource configuration device 600.

The processor 602 is configured to implement the resource configuration method shown in FIG. 2. The method includes:
obtaining a first resource increment specific to a resource group; and
determining first resources of the first resource increment, and reserving the first resources for the resource group or allocating the first resources to the resource group.

Optionally, when obtaining the first resource increment, the processor 602 is specifically configured to:
receive a resource increment request message sent by a resource request device and carrying an identifier of the resource group, and obtain the first resource increment included in the resource request message; or
generate the first resource increment based on a local resource configuration.

Optionally, when allocating the first resources to the resource group, the processor 602 is specifically configured to:
add the first resources to a resource limit that is maintained by the resource configuration device 600 for the resource group, where the resource limit is allocated by the resource configuration device 600 to the resource group.

Optionally, the processor 602 is further configured to:
after reserving the first resources for the resource group, when a resource limit maintained by the resource configuration device 600 is less than a target resource application volume of the resource group, allocate some or all of the first resources to the resource group, where the resource limit is allocated by the resource configuration device 600 to the resource group.

Optionally, when determining the first resources of the first resource increment, the processor 602 is specifically configured to:
obtain an application condition corresponding to the first resource increment, where the application condition is used to indicate a necessary condition under which the first resources of the first resource increment are reserved for or are allocated to the resource group; and
determine the first resources of the first resource increment when determining that the application condition is already satisfied.

Optionally, the application condition includes any one or a combination of a time range, a service entity range, and a virtual resource data center range;
the time range is used to limit a time during which the first resources of the first resource increment are reserved for the resource group;
the service entity range is used to limit an entity that implements life cycle management of a particular virtualized network function VNF; and
the virtual resource data center range is used to limit a particular data center in which the first resources are located.

Optionally, the processor 602 is further configured to:
after the first resources are reserved for or are allocated to the resource group, obtain a second resource increment specific to the resource group; and
release the first resources, determine second resources of the second resource increment, and reserve the second resources for the resource group or allocate the second resources to the resource group.

Optionally, when obtaining the second resource increment, the processor 602 is specifically configured to:
receive a resource increment modification request message sent by the resource request device and carrying the identifier of the resource group, and obtain the second resource increment included in the resource increment modification request message; or
generate the second resource increment based on a local resource configuration.

Optionally, the processor 602 is further configured to:
after reserving the first resources for the resource group or allocating the first resources to the resource group, receive a resource increment deletion request message sent by the resource request device and carrying the identifier of the resource group, and release the first resources based on the resource increment deletion request message; or delete the first resources based on a local resource configuration.

The memory 604 is configured to store a program and the like. Specifically, the program may include program code, and the program code includes a computer operation instruction. The memory 604 may include a random access memory (random access memory, RAM for short), and may further include a non-volatile memory (non-volatile memory), for example, at least one magnetic disk memory. The processor 602 executes an application program stored in the memory 604 to implement the foregoing function, to implement the resource configuration method shown in FIG. 2.

According to the resource configuration device provided in this embodiment of the present invention, the resource configuration device may obtain a resource increment specific to a resource group, and reserve a resource of the resource increment for the resource group or allocate a resource of the resource increment to the resource group, so that the resource configuration device can flexibly allocate a resource to the resource group. When the resource group needs to be scaled out, but a target resource application volume for the scale-out exceeds a resource limit of the resource group that is maintained by the resource configuration device, the resource configuration device can allocate sufficient resources to the resource group. Therefore, according to the resource allocation method, a sudden requirement for an additional resource can be elastically responded to.

Based on the foregoing embodiment, an embodiment of the present invention further provides a first resource management device. The first resource management device may include a first VNFM in the NFV architecture shown in FIG. 1, and a second resource management device may include a second VNFM in the NFV architecture. The first resource management device can implement the resource configuration method shown in FIG. 3. Referring to FIG. 7, the first resource management device 700 includes a transceiver 701, a processor 702, a bus 703, and a memory 704.

The transceiver 701, the processor 702, and the memory 704 are connected to each other by using the bus 703. The bus 703 may be a peripheral component interconnect (peripheral component interconnect, PCI for short) bus, an extended industry standard architecture (extended industry standard architecture, EISA for short) bus, or the like. The bus may be categorized as an address bus, a data bus, a control bus, or the like. For ease of indication, the bus is indicated by using only one bold line in FIG. 7. However, it does not indicate that there is only one bus or only one type of bus.

The transceiver 701 is configured to communicate and interact with another device connected to the resource management device 700.

The processor 702 is configured to implement the resource configuration method shown in FIG. 3. The method includes:
obtaining a resource increment request message sent by a second resource management device and carrying an identifier of a resource group, where the resource increment request message further includes a resource increment; and
forwarding the resource increment request message to a resource configuration device, so that the resource configuration device reserves a resource for the resource group or allocates a resource to the resource group based on the resource increment request message, where the resource configuration device corresponds to the first resource management device 700.

Optionally, when forwarding the resource increment request message to the resource configuration device, the processor 702 is specifically configured to:
determine an identity level of the second resource management device; and
forward the resource increment request message to the resource configuration device after determining that the identity level of the second resource management device is higher than an identity level of the first resource management device 700.

Optionally, when forwarding the resource increment request message to the resource configuration device, the processor 702 is specifically configured to:
determine a priority of the second resource management device; and
forward the resource increment request message to the resource configuration device after determining that the priority of the second resource management device is higher than a priority of the first resource management device 700.

Optionally, when forwarding the resource increment request message to the resource configuration device, the processor 702 is specifically configured to:
determine a weight of the second resource management device and a weight of the first resource management device 700; and
forward the resource increment request message to the resource configuration device 700 after determining that the weight of the second resource management device is greater than the weight of the first resource management device.

Optionally, when determining the weight of the second resource management device, the processor 702 is specifically configured to:
obtain at least one weight-type parameter and a weight coefficient corresponding to the at least one weight-type parameter; and
determine a value of the at least one weight-type parameter of the second resource management device, and determine the weight of the second resource management device based on the value of the at least one weight-type parameter of the second resource management device and a corresponding weight coefficient; and
when determining the weight of the first resource management device 700, the processor 702 is specifically configured to:
   determine a value of the at least one weight-type parameter of the first resource management device 700, and determine the weight of the first resource management device 700 based on the value of the at least one weight-type parameter of the first resource management device 700 and a corresponding weight coefficient.

Optionally, the resource increment request message further includes an application condition, and the application condition is used to indicate a necessary condition under which the resource of the resource increment is reserved for or is allocated to the resource group.

Optionally, the application condition includes any one or a combination of a time range, a service entity range, and a virtual resource data center range;
the time range is used to limit a time during which the first resources of the resource increment are reserved for the resource group;
the service entity range is used to limit an entity that implements life cycle management of a particular virtualized network function VNF; and
the virtual resource data center range is used to limit a particular data center in which a resource requested by using the resource increment request message is located.

The memory 704 is configured to store a program and the like. Specifically, the program may include program code, and the program code includes a computer operation instruction. The memory 704 may include a random access memory (random access memory, RAM for short), and may further include a non-volatile memory (non-volatile memory), for example, at least one magnetic disk memory. The processor 702 executes an application program stored in the memory 704 to implement the foregoing function, to implement the resource configuration method shown in FIG. 3.

According to the first resource management device provided in this embodiment of the present invention, the first resource management device obtains the resource increment request message sent by the second resource management device, and then forwards the resource increment request message to the resource configuration device corresponding to the first resource management device, to flexibly perform resource configuration on the resource group to which the second resource management device is specific. When the resource group needs to be scaled out, but a target resource application volume for the scale-out exceeds a resource limit of the resource group that is maintained by a resource configuration device corresponding to the second resource management device, the resource configuration device corresponding to the first resource management device can allocate sufficient resources to the resource group. Therefore, according to the resource allocation method, a sudden requirement for an additional resource can be elastically responded to.

According to the resource configuration method and the apparatus provided in the embodiments of the present invention, the resource configuration device may obtain a resource increment specific to a resource group, and reserve a resource of the resource increment for the resource group or allocate a resource of the resource increment to the resource group, so that the resource configuration device can flexibly allocate a resource to the resource group. When the resource group needs to be scaled out, but a target resource application volume for the scale-out exceeds a resource limit of the resource group that is maintained by the resource configuration device, the resource configuration device can allocate sufficient resources to the resource group. Therefore, according to the resource allocation method, a sudden requirement for an additional resource can be elastically responded to.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A resource configuration method, comprising:
obtaining, by a resource configuration device, a first resource increment specific to a resource group; and
determining, by the resource configuration device, first resources of the first resource increment, and reserving the first resources for the resource group or allocating the first resources to the resource group.

2. The method according to claim 1, wherein the obtaining, by a resource configuration device, the first resource increment comprises:
receiving, by the resource configuration device, a resource increment request message sent by a resource request device and carrying an identifier of the resource group, and obtaining the first resource increment comprised in the resource request message; or
generating, by the resource configuration device, the first resource increment based on a local resource configuration.

3. The method according to claim 1 or 2, wherein the allocating, by the resource configuration device, the first resources to the resource group comprises:
adding, by the resource configuration device, the first resources to a resource limit that is maintained by the resource configuration device for the resource group, wherein the resource limit is allocated by the resource configuration device to the resource group.

4. The method according to claim 1 or 2, wherein after the reserving, by the resource configuration device, the first resources for the resource group, the method further comprises:
when a resource limit maintained by the resource configuration device is less than a target resource application volume of the resource group, allocating, by the resource configuration device, some or all of the first resources to the resource group, wherein the resource limit is allocated by the resource configuration device to the resource group.

5. The method according to any one of claims 1 to 4, wherein the determining, by the resource configuration device, first resources of the first resource increment comprises:
obtaining, by the resource configuration device, an application condition corresponding to the first resource increment, wherein the application condition is used to indicate a necessary condition under which the first resources of the first resource increment are reserved for or are allocated to the resource group; and
determining, by the resource configuration device, the first resources of the first resource increment when determining that the application condition is already satisfied.

6. The method according to claim 5, wherein the application condition comprises any one or a combination of a time range, a service entity range, and a virtual resource data center range;
the time range is used to limit a time during which the first resources of the first resource increment are reserved for the resource group;
the service entity range is used to limit an entity that implements life cycle management of a particular virtualized network function VNF; and
the virtual resource data center range is used to limit a particular data center in which the first resources are located.

7. The method according to claim 1 or 2, wherein after the reserving, by the resource configuration device, the first resources for the resource group or allocating the first resources to the resource group, the method further comprises:
obtaining, by the resource configuration device, a second resource increment specific to the resource group; and
releasing, by the resource configuration device, the first resources, determining second resources of the second resource increment, and reserving the second resources for the resource group or allocating the second resources to the resource group.

8. The method according to claim 7, wherein the obtaining, by the resource configuration device, the second resource increment comprises:
receiving, by the resource configuration device, a resource increment modification request message sent by the resource request device and carrying the identifier of the resource group, and obtaining the second resource increment comprised in the resource increment modification request message; or
generating, by the resource configuration device, the second resource increment based on a local resource configuration.

9. The method according to claim 1 or 2, wherein after the reserving, by the resource configuration device, the first resources for the resource group or allocating the first resources to the resource group, the method further comprises:
receiving, by the resource configuration device, a resource increment deletion request message sent by the resource request device and carrying the identifier of the resource group, and releasing the first resources based on the resource increment deletion request message; or
deleting, by the resource configuration device, the first resources based on a local resource configuration.

10. The method according to any one of claims 1 to 9, wherein the resource configuration device comprises a network functions virtualization orchestrator NFVO or a virtualized infrastructure manager VIM.

11. A resource configuration method, comprising:
obtaining, by a first resource management device, a resource increment request message sent by a second resource management device and carrying an identifier of a resource group, wherein the resource increment request message further comprises a resource increment; and
forwarding, by the first resource management device, the resource increment request message to a resource configuration device, so that the resource configuration device reserves a resource for the resource group or allocates a resource to the resource group based on the resource increment request message, wherein the resource configuration device corresponds to the first resource management device.

12. The method according to claim 11, wherein the forwarding, by the first resource management device, the resource increment request message to the resource configuration device comprises:
determining, by the first resource management device, an identity level of the second resource management device; and
forwarding, by the first resource management device, the resource increment request message to the resource configuration device after determining that the identity level of the second resource management device is higher than an identity level of the first resource management device.

13. The method according to claim 11, wherein the forwarding, by the first resource management device, the resource increment request message to the resource configuration device comprises:
determining, by the first resource management device, a priority of the second resource management device; and
forwarding, by the first resource management device, the resource increment request message to the resource configuration device after determining that the priority of the second resource management device is higher than a priority of the first resource management device.

14. The method according to claim 11, wherein the forwarding, by the first resource management device, the resource increment request message to the resource configuration device comprises:
determining, by the first resource management device, a weight of the second resource management device and a weight of the first resource management device; and
forwarding, by the first resource management device, the resource increment request message to the resource configuration device after determining that the weight of the second resource management device is greater than the weight of the first resource management device.

15. The method according to claim 14, wherein the determining, by the first resource management device, a weight of the second resource management device comprises:
obtaining, by the first resource management device, at least one weight-type parameter and a weight coefficient corresponding to the at least one weight-type parameter; and
determining, by the first resource management device, a value of the at least one weight-type parameter of the second resource management device, and determining the weight of the second resource management device based on the value of the at least one weight-type parameter of the second resource management device and a corresponding weight coefficient; and
the determining, by the first resource management device, a weight of the first resource management device comprises:
determining, by the first resource management device, a value of the at least one weight-type parameter of the first resource management device, and determining the weight of the first resource management device based on the value of the at least one weight-type parameter of the first resource management device and a corresponding weight coefficient.

16. The method according to any one of claims 11 to 15, wherein the resource increment request message further comprises an application condition, and the application condition is used to indicate a necessary condition under which the resource of the resource increment is reserved for or is allocated to the resource group.

17. The method according to claim 16, wherein the application condition comprises any one or a combination of the following: a time range, a service entity range, and a virtual resource data center range;
the time range is used to limit a time during which the first resources of the resource increment are reserved for the resource group;
the service entity range is used to limit an entity that implements life cycle management of a particular virtualized network function VNF; and
the virtual resource data center range is used to limit a particular data center in which a resource requested by using the resource increment request message is located.

18. The method according to any one of claims 11 to 17, wherein the first resource management device comprises a first virtualized network function manager VNFM, and the second resource management device comprises a second VNFM.

19. A resource configuration device, comprising:
an obtaining unit, configured to obtain a first resource increment specific to a resource group; and
a processing unit, configured to: determine first resources of the first resource increment, and reserve the first resources for the resource group or allocate the first resources to the resource group.

20. The resource configuration device according to claim 19, wherein the obtaining unit is specifically configured to:
receive a resource increment request message sent by a resource request device and carrying an identifier of the resource group, and obtain the first resource increment comprised in the resource request message; or
generate the first resource increment based on a local resource configuration.

21. The resource configuration device according to claim 19 or 20, wherein when allocating the first resources to the resource group, the processing unit is specifically configured to:
add the first resources to a resource limit that is maintained by the resource configuration device for the resource group, wherein the resource limit is allocated by the resource configuration device to the resource group.

22. The resource configuration device according to claim 19 or 20, wherein the processing unit is further configured to:
after reserving the first resources for the resource group, when a resource limit maintained by the resource configuration device is less than a target resource application volume of the resource group, allocate some or all of the first resources to the resource group, wherein the resource limit is allocated by the resource configuration device to the resource group.

23. The resource configuration device according to any one of claims 19 to 22, wherein when determining the first resources of the first resource increment, the processing unit is specifically configured to:
obtain an application condition corresponding to the first resource increment, wherein the application condition is used to indicate a necessary condition under which the first resources of the first resource increment are reserved for or are allocated to the resource group; and
determine the first resources of the first resource increment when determining that the application condition is already satisfied.

24. The resource configuration device according to claim 23, wherein the application condition comprises any one or a combination of a time range, a service entity range, and a virtual resource data center range;
the time range is used to limit a time during which the first resources of the first resource increment are reserved for the resource group;
the service entity range is used to limit an entity that implements life cycle management of a particular virtualized network function VNF; and
the virtual resource data center range is used to limit a particular data center in which the first resources are located.

25. The resource configuration device according to claim 19 or 20, wherein the obtaining unit is further configured to:
after the first resources are reserved for or are allocated to the resource group, obtain a second resource increment specific to the resource group; and
the processing unit is further configured to: release the first resources, determine second resources of the second resource increment, and reserve the second resources for the resource group or allocate the second resources to the resource group.

26. The resource configuration device according to claim 25, wherein when obtaining the second resource increment, the obtaining unit is specifically configured to:
receive a resource increment modification request message sent by the resource request device and carrying the identifier of the resource group, and obtain the second resource increment comprised in the resource increment modification request message; or
generate the second resource increment based on a local resource configuration.

27. The resource configuration device according to claim 19 or 20, wherein the processing unit is further configured to: after reserving the first resources for the resource group or allocating the first resources to the resource group, receive a resource increment deletion request message sent by the resource request device and carrying the identifier of the resource group, and release the first resources based on the resource increment deletion request message; or delete the first resources based on a local resource configuration.

28. The resource configuration device according to any one of claims 19 to 27, wherein the resource configuration device comprises a network functions virtualization orchestrator NFVO or a virtualized infrastructure manager VIM.

29. A first resource management device, comprising:
an obtaining unit, configured to obtain a resource increment request message sent by a second resource management device and carrying an identifier of a resource group, wherein the resource increment request message further comprises a resource increment; and
a processing unit, configured to forward the resource increment request message to a resource configuration device, so that the resource configuration device reserves a resource for the resource group or allocates a resource to the resource group based on the resource increment request message, wherein the resource configuration device corresponds to the first resource management device.

30. The resource management device according to claim 29, wherein the processing unit is specifically configured to:
determine an identity level of the second resource management device; and
forward the resource increment request message to the resource configuration device after determining that the identity level of the second resource management device is higher than an identity level of the first resource management device.

31. The resource management device according to claim 29, wherein the processing unit is specifically configured to:
determine a priority of the second resource management device; and
forward the resource increment request message to the resource configuration device after determining that the priority of the second resource management device is higher than a priority of the first resource management device.

32. The resource management device according to claim 29, wherein the processing unit is specifically configured to:
determine a weight of the second resource management device and a weight of the first resource management device; and
forward the resource increment request message to the resource configuration device after determining that the weight of the second resource management device is greater than the weight of the first resource management device.

33. The resource management device according to claim 32, wherein when determining the weight of the second resource management device, the processing unit is specifically configured to:
obtain at least one weight-type parameter and a weight coefficient corresponding to the at least one weight-type parameter; and
determine a value of the at least one weight-type parameter of the second resource management device, and determine the weight of the second resource management device based on the value of the at least one weight-type parameter of the second resource management device and a corresponding weight coefficient; and
when determining the weight of the first resource management device, the processing unit is specifically configured to:
determine a value of the at least one weight-type parameter of the first resource management device, and determine the weight of the first resource management device based on the value of the at least one weight-type parameter of the first resource management device and a corresponding weight coefficient.

34. The resource management device according to any one of claims 29 to 33, wherein the resource increment request message further comprises an application condition, and the application condition is used to indicate a necessary condition under which the resource of the resource increment is reserved for or is allocated to the resource group.

35. The resource management device according to claim 34, wherein the application condition comprises any one or a combination of a time range, a service entity range, and a virtual resource data center range;
the time range is used to limit a time during which the first resources of the resource increment are reserved for the resource group;
the service entity range is used to limit an entity that implements life cycle management of a particular virtualized network function VNF; and
the virtual resource data center range is used to limit a particular data center in which a resource requested by using the resource increment request message is located.

36. The resource management device according to any one of claims 29 to 35, wherein the first resource management device comprises a first virtualized network function manager VNFM, and the second resource management device comprises a second VNFM.
